# EUROPEAN PATENT SPECIFICATION

(11) **EP 2 346 129 B1**
(45) Date of publication and mention of the grant of the patent: **17.07.2013**
(21) Application number: 11150944.4
(22) Date of filing: 14.01.2011
(51) Int. Cl.: H02G 3/04, H02G 3/06

(54) **Clamping system for connecting wire mesh cable channel sections**
Spannsystem zur Verbindung von Drahtgitterkabelkanalabschnitte
Système de serrage pour la connexion des tronçons de chemin de cables en treillis de fils

(30) Priority: 15.01.2010 ES 201030034
(43) Date of publication of application: 20.07.2011
(73) Proprietor: Aiscan, S.L., 03410 Biar (ES)
(72) Inventor: Frances Perez, Manuel, 03410, Biar (ES)
(74) Representative: Arpe Fernandez, Manuel de

(56) References cited:
- EP-A1- 1 315 261
- FR-A1- 2 857 792

## Description

The present invention is referred to a Clamping system for connecting wire mesh cable channel sections.

### Scope and prior art

The invention generally refers to the laying and assembly of wire mesh cable channels, for the laying of wires in all kinds of works and constructions.

The current state of the art defines as wire mesh cable channels those channels built on the basis of a plurality of sections in the shape of a tray, that are connected one after another. Each section of the cable channel is formed by a plurality of metallic wire bars that extend lengthwise and that are joined together by means on U-shaped metallic wire bars transversely positioned and welded to the longitudinal bars, such longitudinal bars forming the side walls and the bottom wall of the channel.

As it has been previously mentioned, a certain number of cable channel sections should be joined one after another in a lengthwise direction in order to obtain a cable channel of a specific length.

The European Patent document 0418167, also published as ES 2066167, discloses a quick-mount clamping device which is used to obtain a cable channel comprising at least two channel sections. This clamp is arranged as an elongate rigid strip, whose first end has the shape of an approximately semi-cylindrical longitudinal groove, which has been foreseen to tightly fit into one of the longitudinal bars of the cable channel, and with a second end in the shape of a longitudinal flange extending in a direction opposite to the opening of the groove of the first end - towards the interior of the wire channel - and lugs or tabs that can be bent around a respective vertical section of the U-shaped transversal wire bar; when the lug or tab is bent, with the help of a special tool, it fits into an opening which has been foreseen in the body of the rigid strip.

Considering that the clamp according to this document is longitudinally arranged on the wire bars that form the upper part of the side walls of two adjacent sections of the cable channel, the cable duct or channel resulting from the coupling of different sections offers a proper resistance against the pulling and twisting efforts occurring between sections, but shows little resistance against efforts made in a direction perpendicular to the laying direction of the channel, which are caused, for instance, by the weight of the cables, which is inadequate for the consistency of the the channel system. Furthermore, as the longitudinal tab of the second end of such clamp extends towards the interior of the cable channel, it could cause eventual damages to the cables laid over the channel.

The European Patent document 0973238, also published as ES 2279589, describes a wire mesh cable channel consisting of different sections that can be assembled without the need for additional clamping devices, by attaching, in a longitudinal direction, one of the ends of the cable through which includes, at least, two U-shaped wire crossbars attached to the longitudinal wire bars and which are adequately spaced so that it is possible to snap-on a U-shaped wire crossbar present at the opposite side of an adjacent section of cable channel. This tight coupling of the complementary ends of the adjacent channel sections provides the resulting channel assembly with an appropriate strength against any force applied in a direction which is perpendicular to the cable laying direction. However, this type of coupling is easily detached when it is subject to twisting forces between the different sections, in such cable laying direction, with the resulting risk that the sections may become uncoupled.

### Object of the invention

On the basis of the previously described state of the art, the object of this patent is to provide a clamping system that allows to connect wire mesh cable channel sections, consisting of a single-piece clamp that guarantees an appropriate resistance against the forces exercised between the different sections of the cable channel obtained, both in a direction that is perpendicular to the cable channel laying direction and against any pulling and twisting efforts made in such channel laying direction.

This object is achieved by means of the characteristics included in claim 1. Other objects and advantages will be apparent from the characteristics included in the dependent claims.

According to this patent, the invention is based on a clamping system that allows to attach wire mesh cable channel sections, each cable channel section being formed by a plurality of longitudinal wire bars that form the side walls and the bottom wall of the cable channel and by a plurality of U-shaped wire mesh bars with vertical branches and a horizontal branch, that are welded across the longitudinal bars and evenly spaced along the section, starting on both ends;
- such clamping system being formed by a clamp comprising a first clamp section that has been foreseen so that it is tightly fitted to the vertical branches of the U-shaped wire bars located at the ends of two adjacent cable channel sections, and a second clamp section foreseen so that it is tightly fitted to the horizontal branch of the U-shaped wire bars located at the ends of two adjacent cable channel sections;
- the first and the second clamp sections having been foreseen in a general W shape, comprising:
- two longitudinal grooves with a C-shape cross section, where the wire crossbars are fitted;
- a central portion that extends joining the relevant longitudinal grooves, comprising the corresponding projections, such projections being used as an additional support for the wire bars located at such respective longitudinal grooves; and
- respective flange sections that extend from the outer edges of the relevant longitudinal grooves,

Such assembly being characterised in that:
- the said flange sections extend in a direction that is essentially parallel to the diameters of the longitudinal grooves, and such flange sections incorporate end portions with a general hook shape, that have been foreseen to be tightly fitted to the relevant longitudinal bars that form the relevant side wall and the bottom wall, respectively, of the cable channel, such hook ends of the first clamp section being opened in the opposite direction to the second clamp section, so that they are clamped to the relevant longitudinal bars in a downwards direction and in an upwards direction, respectively, and vice versa.

According to an additional characteristic of the invention, it is advantageous that the relevant hook ends are configured to be fitted to the relevant longitudinal bars, in the manner of a clip.

Another additional advantage, according to yet another characteristic of the invention, is obtained when at least the relevant hook ends of the first clamp section comprise a flange that is used to manually push the hook end against the relevant longitudinal bar, thus making it easier to fit the end to the bar.

### Brief description of the figures

Other characteristics and advantages of the invention will be apparent from the following description, that has been made with the help of the attached drawings, that show an exemplary non-limitative embodiment, and where:
Figure 1 shows an schematic perspective view of a cable channel comprising two sections, with the clamping system of the invention shown in a position prior to its coupling.
Figures 2A to 2C respectively show perspective and side views of the clamp according to the invention.
Figure 3 shows a cable channel comprising two sections, such cable channel being already assembled with the help of the clamping system of the invention.

### Detailed description of a preferred embodiment

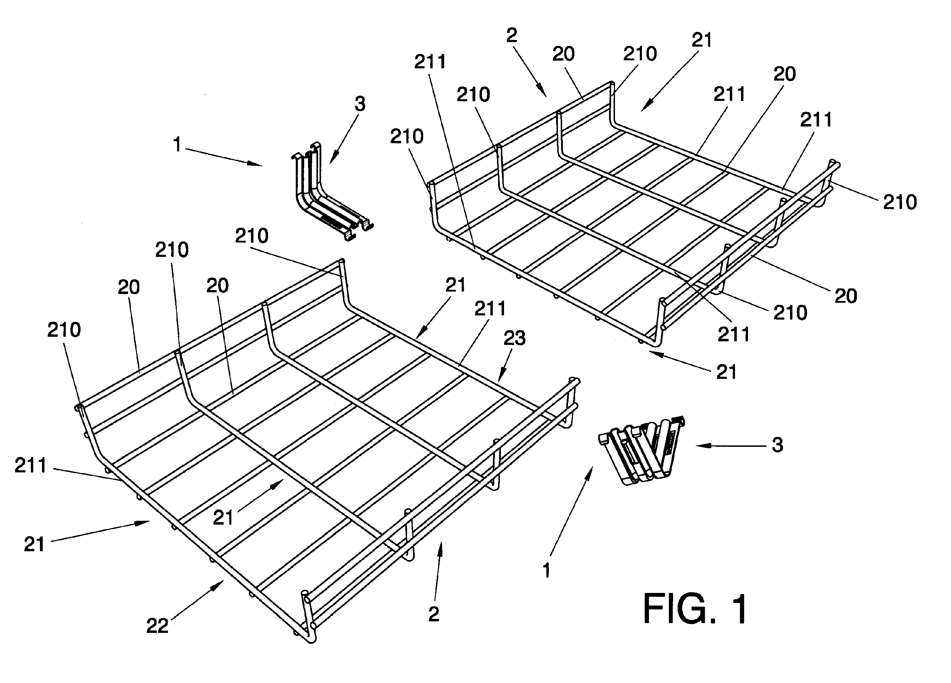

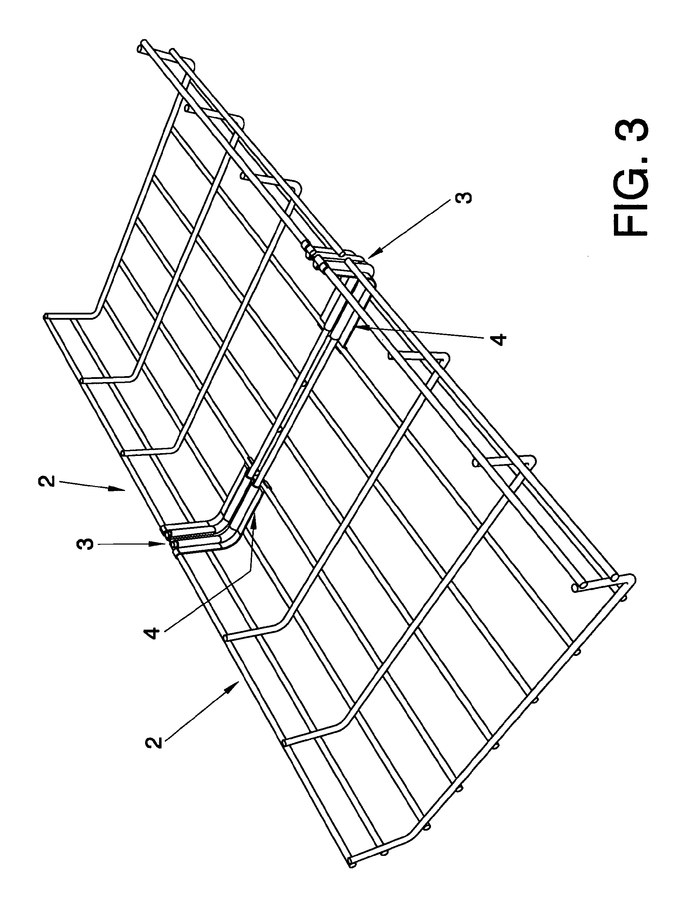

As it can be seen in figures 1 and 3, a cable channel is obtained by attaching, one after another, a plurality of cable channel sections 2, in the shape of a tray, where the cabling is laid, each section 2 being formed by a plurality of longitudinal wire bars 20 that form the side walls and the bottom wall of the cable channel, and by a plurality of U-shaped wire bars 21 that are transversely welded to the longitudinal bars and that have been uniformly spaced along the section, starting on the ends 22, 23 of the cable channel section 2. Additionally, it can be seen that the U-shaped bars 21 comprise two vertical branches 210 and a vertical branch 211.

The clamping system, which has been generally designated by means of the numerical reference 1, comprises a series of clamps 3 with a general shape of an L, that have been arranged to be tightly fitted to the U-shaped wire crossbars 21, especially on the vertical branches 210 and the horizontal branches 211, and additionally, on the longitudinal bars 20 forming the side walls and the bottom wall of the cable channel, as it will be explained in more detail below.

It can be appreciated that each clamp 3 comprises a first clamp section 30 and another clamp section 31, the first clamp section being foreseen so that it can be tightly fitted to the vertical branches 210 of the U-shaped wire bars 21 located at the ends of two adjacent sections of the cable channel; and the second clamp section 31 has been foreseen so that it can be tightly fitted to the horizontal branch 211 of the U-shaped wire bars 21 located at the ends of two adjacent sections of the cable channel.

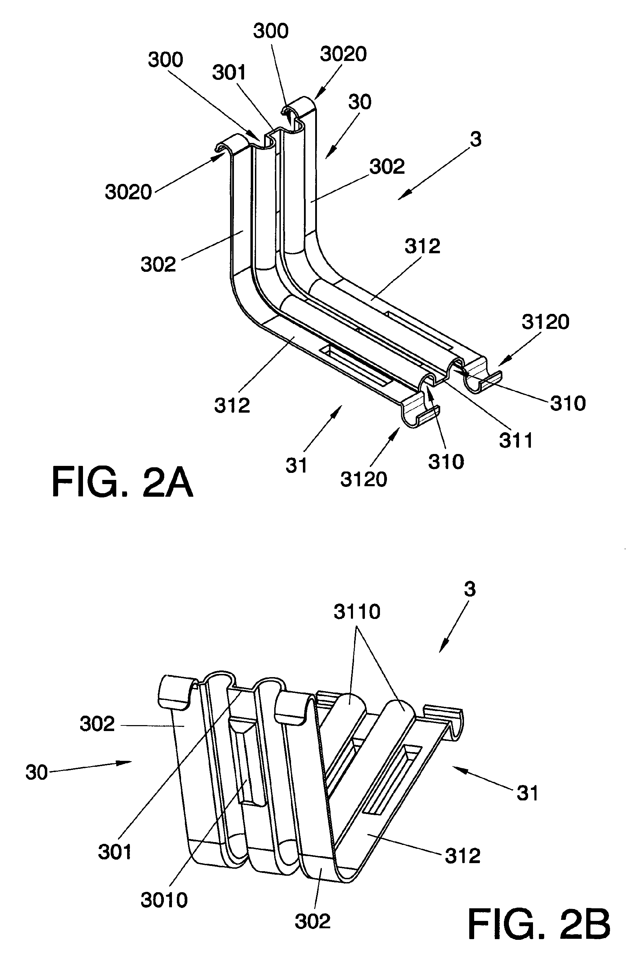

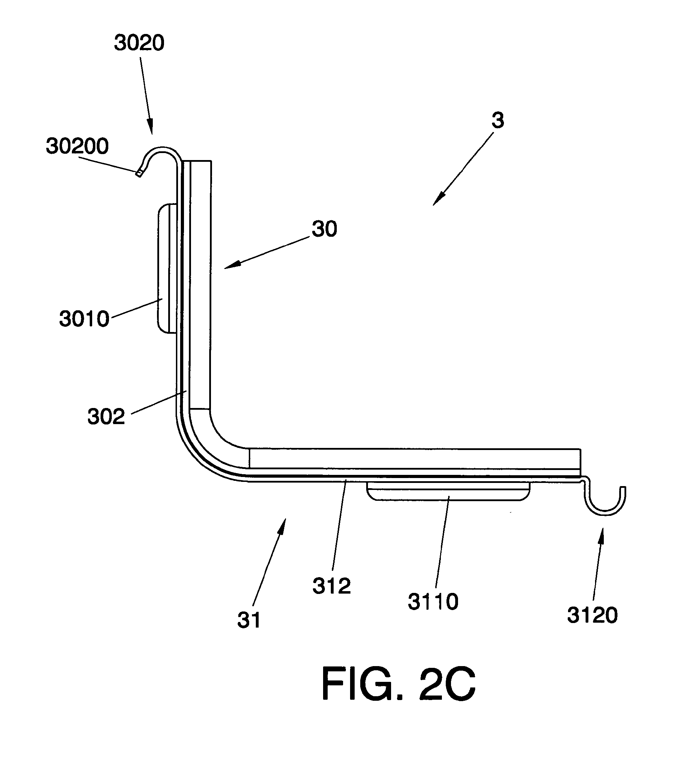

As it can be seen in more detail in Figures 2A to 2C and 3, both the first clamp section 30 and the second clamp section 31 have been foreseen as a piece with the general shape of a W, comprising:
- two respective longitudinal grooves 300-300, 310-310 with a C-shaped cross-section, where the wire bars 210-211 are fitted.
- a respective central section 301, 311 that extends joining the respective longitudinal grooves which implenet the respective projections 3010, 3110; and
- respective flange sections 302, 312 that extend from the outer edges of the respective longitudinal grooves 30, 31.

Referring also to figures 2A to 2C, it can be appreciated that these flange sections 302, 312 extend in an essentially parallel manner with respect to the diameters of the longitudinal grooves 300, 310.

Furthermore, said flange sections 302, 312 respectively comprise ends 3020, 3120 with the general shape of a hook, that are used to tightly fit them to the longitudinal bars 20 that form the side wall and the bottom wall, respectively, of the cable channel. Additionally, it can be appreciated that the hook ends 3020 of the first clamp section 30 are opened in the opposite direction to that of the hook ends 3120 of the second clamp section 31. This way, the hook ends 3020, 3120 are coupled to the relevant longitudinal bars, in an up to down or in a down to up direction, respectively, or vice versa, in the opposite case, which has not been represented.

Referring again to figures 2A to 2C, and referring also to figure 3, it can be appreciated that, according to the invention, the relevant hook ends 3020, 3120 are configured to fit as a clip to the respective longitudinal bars 20.

As it can be seen in the figures, the relevant hook ends 3020 of the first clamp section 30 comprise a flange 30200, which serves to manually push the hook end against the relevant longitudinal bar 20, thus making it easier to fit such end to the said bar.

According to this system, and thanks to it's special configuration, the clamps an be additionally welded to the bar sections of each element of the cable channel, so that this latter one has an appropriate structural strength.

As it will be easily understood by any person skilled in the art, the above description is a mere illustration of a preferred embodiment of the invention, and it is possible to introduce any kind of technical modifications, so that the invention is limited only by the scope of the following claims.

## Claims

1. Clamping system for connecting wire mesh cable channel sections, each section of the cable channel (2) being formed by a plurality of longitudinal wire bars (20) that form the side walls and the bottom wall of the cable channel, and by a plurality of U-shaped wire bars (21) with vertical branches (210) and a horizontal branch (211) that are transversely welded to the longitudinal bars and that are uniformly distributed along the section, starting at both ends (22, 23);
- such clamping system (1) being formed by a clamp (3) that comprises a first clamp section (30) which has been foreseen to be tightly fitted to the vertical branches (210) of the U-shaped wire bars (21) located at the ends of two adjacent sections of the cable channel, and a second clamp section (31) foreseen so that it can be tightly fitted to the horizontal branch (211) of the U-shape wire bars (21) located at the ends of two adjacent sections of the cable channel;
- the first and the second clamp sections (30, 31) being foreseen in the general shape of a W, comprising:
- two respective longitudinal grooves (300, 310) with a C-shaped cross section, where the transverse wire bars (21) can be fitted;
- a respective central section (301, 311) which extends joining the relevant longitudinal grooves, comprising the corresponding projections (3010, 3110), such projections being used as an additional support for the wire bars located at such respective longitudinal grooves; and
- respective flange sections (302, 312) that extend from the outer edges of the relevant longitudinal grooves (30, 31),
such flange sections incorporating end portions (3020, 3120) with a general hook shape, that have been foreseen to be tightly fitted to the relevant longitudinal bars (20) that form the relevant side wall and the bottom wall, respectively, of the cable channel, **characterised in that**: - the said flange sections (302, 312) extend in a manner that is essentially parallel to the diameters of the longitudinal grooves (300, 310), and such hook ends (3020) of the first clamp section (30) are opened in the opposite direction to the hook ends (3120) of the second clamp section (31), so that they are clamped to the relevant longitudinal bars from an up to down or from an down to up direction, respectively, and vice versa.

2. Clamping system for connecting wire mesh cable channel sections, according to claim 1, **characterized in that** the relevant hook ends (3020, 3120) are configured so that they are fitted like a clip to the relevant longitudinal bars (20).

3. Clamping system for connecting wire mesh cable channel sections, according to claims 1 and 2, **characterized in that** at least the relevant hook ends (3020) of the first clamp section (30) comprise a flange (30200) which serves to manually push the hook end against the relevant longitudinal bar (20), thus making it easier to fit such end to the said bar.

## Patentansprüche

1. Heftsystem für die Verbindung von Kabelgitterpritschen, wobei jede Pritschenstrecke für die Kabel (2) aus einer Vielzahl von Längsdrahtstäben (20) besteht, die die Seitenwände und den Boden der Kabelpritsche bilden und mit einer Vielzahl von U-förmigen Drahtstäben (21) mit vertikalen Strecken (210) und einer horizontalen Strecke (211), die quer mit den Längsstäben verschweisst und längs der Strecke ab den beiden Enden (22, 23) gleichmässig verteilt sind;
- wobei besagtes Heftsystem (1), das aus einer Heftklammer (3) mit einem ersten Heftteil (30) besteht zur genauen Einfügung der U-förmigen Drahtstäbe (21) in die vertikalen Strecken (210) an den Enden der beiden angrenzenden Kabelpritschenstrecken und mit einerm zweiten Heftteil (31) für die enge Ineinanderfügung mit der horizontalen Strecke (211) der U-förmigen Drahtstäbe (21) an den Enden der beiden angrenzenden Kabelpritschenstrecken;
- wobei der erste und der zweite Heftteil (30, 31) in allgemeiner W-Form vorgesehen sind und:
- zwei entsprechende Längsrillen (300, 310) aufweisen mit einem Querschnitt in Form eines C's, in denen die Querdrahtstäbe (21) eingefügt werden;
- mit einem entsprechenden Mittelteil (301, 311), der sich unter Verbindung der entsprechenden Längsrillen erstreckt und mit den entsprechenden Vorsprüngen (3010, 3110) versehen ist, die für eine zusätzliche Stützung der Drahtstäbe dienen, die in den entsprechenden, erwähnten Längsrillen liegen; und
- mit entsprechenden Rippenstrecken (302, 312) versehen sind, die sich ab den Aussenkanten der entsprechenden Längsrillen (30, 31) erstrecken;
- wobei die Rippenstrecken (302, 312) im wesentlichen parallel zu den Durchmessern der Längsrillen (300, 310) verlaufen, wobei diese Rippenstrecken entsprechende Enden (3020, 3120) in einer allgemeinen Hakenform aufweisen, die für eine genaue Einfügung in die ensprechenden Längsstäbe (20) vorgesehen sind, die die entsprechende Seitenwand und den Boden der Kabelpritsche bilden, **dadurch gekennzeichnet, dass** besagte Hakenenden (3020) des ersten Heftteils (30) entgegengesetzt der Hakenenden (3120) des zweiten Heftteils (31) offen sind, so dass sie von oben nach unten über die entsprechenden Längsstäbe geschoben werden können und von unten nach oben oder umgekehrt.

2. Heftsystem für die Verbindung von Kabelgitterpritschen übereinstimmend mit Anspruch 1, **dadurch gekennzeichnet, dass** die entsprechenden Hakenenden (3020, 3120) so ausgebildet sind, dass sie in Form einer Heftklammer über die entsprechenden Längsstäbe (20) geschoben werden können.

3. Heftsystem für die Verbindung von Kabelgitterpritschen übereinstimmend mit Anspruch 1 und 2, **dadurch gekennzeichnet, dass** mindestens die entsprechenden Hakenenden (3020) des ersten Heftteils (30) mit einem entsprechenden Ansatz (30200) versehen sind, die dazu dienen, mit der Hand das Hakenende gegen den entsprechenden Längsstab (20) zu drücken und so das Aufschieben auf den Stab zu erleichtern.

## Revendications

1. Système d'agrafage pour unir des tronçons de chemin de câbles en treillis», chaque tronçon du chemin de câbles (2) étant formé par plusieurs tiges longitudinales en fils métalliques (20) qui constituent les ailes ainsi que le fond du chemin de câbles et par plusieurs tiges en fils métalliques en forme de U (21) avec des branches verticales (210) et une branche horizontale (211) qui sont soudées transversalement aux tiges longitudinales et qui sont réparties à intervalles réguliers tout au long du tronçon à partir de ses deux extrémités (22, 23);
- ledit système d'agrafage (1) étant constitué d'une agrafe (3) dont la première portion (30) est prévue pour s'emboîter parfaitement aux branches verticales (210) en fils métalliques en U (21) situées aux extrémités de deux tronçons contigus de chemin de câbles et dont la seconde portion (31) est prévue pour s'emboîter parfaitement à la branche horizontale (211) des tiges en fils métalliques en U (21) situées aux extrémités de deux tronçons contigus de chemin de câbles ;
- étant prévu que la première et la deuxième portion de l'agrafe (30, 31) avec une forme générale en W, présentent :
- respectivement deux cannelures longitudinales (300, 310) à section transversale en forme de C dans lesquelles s'emboîtent les tiges transversales en fils métalliques (21);
- une portion centrale (301, 311) qui s'étend en unissant les cannelures longitudinales respectives qui présentent chacune des protubérances (3010, 3110), lesdites protubérances servant de point d'appui supplémentaire aux tiges en fils métalliques emboîtées dans lesdites cannelures longitudinales, et
- des tronçons respectifs d'ailette (302, 312) qui s'étendent à partir des bords extérieurs des cannelures longitudinales respectives (30, 31),
- lesdits tronçons d'ailette (302, 312) s'étendent essentiellement de manière parallèle aux diamètres des cannelures longitudinales (300, 310), lesdits tronçons d'ailette ont leurs extrémités respectives (3020, 3120) en forme de crochet prévues pour s'enclencher parfaitement aux tiges longitudinales respectives (20) qui constituent l'aile respective et le fond du canal pour câbles, **caractérisé en ce que** les extrémités en forme de crochet (3020) de la première portion de l'agrafe (30) sont ouvertes dans le sens contraire à celui des extrémités en forme de crochet (3120) de la deuxième portion de l'agrafe (31), de manière à ce qu'elles s'accrochent sur les tiges longitudinales respectives de haut en bas et de bas en haut respectivement ou vice versa.

2. Système d'agrafage pour unir des tronçons de chemin de câbles en treillis», selon la revendication 1, **caractérisé en ce que** les extrémités respectives en forme de crochet (3020, 3120) sont conçues pour s'enclencher par le biais d'un clip sur les tiges longitudinales respectives (20).

3. Système d'agrafage pour unir des tronçons de chemin de câbles en treillis», selon les revendications 1 et 2, **caractérisé en ce que** les extrémités respectives en forme de crochet (3020) de la première portion d'agrafe (30) présentent une languette respective (30200) qui sert à pousser manuellement l'extrémité en forme de crochet contre la tige longitudinale (20) respective permettant ainsi de l'enclencher plus facilement sur la tige.
